Europäisches Patentamt

(19) European Patent Office

Office européen des brevets

(11) Numéro de publication: **0 190 090**
A1

(12) # DEMANDE DE BREVET EUROPEEN

(21) Numéro de dépôt: 86440003.1

(22) Date de dépôt: 10.01.86

(51) Int. Cl.⁴: **B 65 G 47/68**

(30) Priorité: 15.01.85 FR 8500622
03.05.85 FR 8506893

(43) Date de publication de la demande:
06.08.86 Bulletin 86/32

(84) Etats contractants désignés:
BE CH DE GB IT LI NL

(71) Demandeur: Société Anonyme dite: GEBO
Rue du Commerce
F-67116 Reichstett(FR)

(72) Inventeur: Siegfriedt, Marc
3, Rue d'Auenheim
F-67770 Sessenheim(FR)

(72) Inventeur: Millet, Pierre
Harchechamp
F-88300 Neufchateau(FR)

(72) Inventeur: Schoen, Robert
51, rue du Maréchal-Foch Ostwald
F-67400 Illkirch Graffenstaden(FR)

(74) Mandataire: Aubertin, François
Cabinet Lepage & Aubertin Innovations et Prestations 4,
rue de Haguenau
F-67000 Strasbourg(FR)

(54) Aligneur sans pression d'objets, notamment de récipients, et son dispositif de régulation.

(57) Un aligneur (1) sans pression d'objets, notamment de récipients, comprenant essentiellement un transporteur d'alimentation à plusieurs voies (2), une surface de séparation (3) intermédiaire formée de plusieurs transporteurs juxtaposés (5), entrainés par des moyens moteurs (6) à des vitesses échelonnées, un transporteur de sortie (4) à voie unique et un dispositif de régulation des vitesses des divers transporteurs, cet aligneur comportant un dispositif de régulation en temps réel (9) des vitesses de fonctionnement desdits transporteurs juxtaposés (5), ledit dispositif de régulation en temps réel (9) étant constitué, d'une part, d'un dispositif de comptage en vrac (10) des récipients (7), disposé au niveau de l'entrée de la surface de séparation (3), et d'autre part, d'un dispositif de comptage en ligne (11) situé au niveau du transporteur de sortie à voie unique (4), lesdits dispositifs de comptage en vrac (10) et de comptage en ligne (11) coopérant avec un calculateur (12) délivrant en temps réel une commande de vitesse aux moyens moteurs (6).

./...

EP 0 190 090 A1

FIG. 1

Aligneur sans pression d'objets, notamment de récipients, et son
dispositif de régulation.

La présente invention concerne un aligneur sans pression d'objets, notamment de récipients, comprenant essentiellement un transporteur d'alimentation à plusieurs voies, une surface de séparation intermédiaire
formée de plusieurs transporteurs juxtaposés entraînés par des moyens
moteurs à des vitesses échelonnées, un transporteur de sortie à voie
unique et un dispositif de régulation des vitesses des divers transporteurs.

Cet aligneur est destiné à regrouper sans pression des bouteilles, récipients ou objets similaires arrivant sur plusieurs files et devant être
présentées sous forme d'une file unique ininterrompue à une machine
située en aval.

On connaît déjà, par le document allemand DE-A-3 129 389, un aligneur
sans pression correspondant au préambule de la revendication 1. Il se
compose de plusieurs transporteurs à chaînes à palettes à plusieurs
voies, destinés à alimenter une surface de séparation des récipients.
Cette surface est également constituée de plusieurs transporteurs à
chaînes à palettes disposés en parallèle et surmontés par une rampe de
guidage curviligne des récipients.

Grâce à un gradient des vitesses des chaînes à palettes constituant la
surface de séparation, on obtient une file unique de récipients à la
sortie sur un transporteur à voie unique, situé directement en amont
de la machine à alimenter.

Pour que la machine soit correctement alimentée, il est nécessaire de
constituer, au niveau de la sortie de l'aligneur, une file unique, ininterrompue et suffisament longue de récipients. Ceci exige, en raison
des inévitables aléas dans l'arrivée des récipients et dans leur passage sur une file unique, une régulation de la vitesse de fonctionnement
des divers éléments mobiles de l'aligneur et ce, en fonction de la distribution des récipients imposée par la machine qui doit être alimentée.

Pour faire face à ce problème, on dispose, dans l'état actuel de la technique, de dispositifs de régulation utilisant des détecteurs de présence de récipients, fonctionnant en tout ou rien, et placés au niveau de la file unique de sortie.

Ces capteurs sont utilisés pour déterminer le degré de remplissage de la file unique de récipients. L'information qu'ils recueillent est utilisée pour la régulation des vitesses des bandes transporteuses de la surface de séparation situées en amont des capteurs, à partir d'une valeur prédéterminée des vitesses, utilisée comme consigne.

Par ailleurs, dans les dispositifs connus dans l'état actuel de la technique et notamment dans le document allemand précité, d'autres capteurs fonctionnant également en tout ou rien sont disposés au niveau de la zone d'alimentation de l'aligneur.

Ces capteurs vérifient l'existence de lacunes éventuelles dans cette zone, et agissent, le cas échéant, sur la vitesse de déplacement des récipients dans la file unique ininterrompue, jusqu'à l'arrêt total de l'aligneur.

Plusieurs inconvénients sont liés aux dispositifs évoqués précédemment. En effet, l'asservissement des vitesses des bandes transporteuses au niveau de la surface de séparation est essentiellement conditionné par ce qui se passe en sortie d'appareil. De plus, la régulation des vitesses ne peut pas se faire en temps réel. Par conséquent, ces dispositifs présentent des temps de réponse élevés en raison notamment de la détection obtenue uniquement au niveau de la file de sortie par détection en tout ou rien. Il en résulte des variations du nombre de récipients présents sur la surface de séparation à un instant donné, ce qui crée fréquemment des trous ou des encombrements dans l'arrivée des récipients, préjudiciables à un fonctionnement à haut débit.

Les constructeurs, pour se prémunir de cet inconvénient, ont été obligés de dimensionner exagérément la surface de séparation de l'aligneur.

Par ailleurs, du fait de la simple détection de présence des récipients arrivant sur plusieurs files au niveau de l'entrée de l'aligneur, on n'a pas accès au nombre exact de récipients arrivant sur la surface de séparation.

La présente invention a pour but de remédier à ces inconvénients. L'invention telle qu'elle est caractérisée dans les revendications résout le problème consistant à créer un aligneur sans pression d'objets, notamment de récipients, comportant un dispositif de régulation en temps réel des vitesses de fonctionnement des divers transporteurs juxtaposés constituant l'aligneur, ledit dispositif de régulation en temps réel étant constitué, d'une part, d'un dispositif de comptage en vrac des récipients et, d'autre part, d'un dispositif de comptage en ligne, lesdits dispositifs de comptage en vrac et de comptage en ligne coopérant avec un calculateur qui délivre aux moteurs d'entraînement des transporteurs juxtaposés une commande de vitesse élaborée en temps réel par le calculateur, en fonction des résultats qui sont fournis simultanément à ce dernier par le dispositif de comptage en vrac, d'une part, et par le dispositif de comptage en ligne, d'autre part.

Les avantages obtenus grâce à cette invention consistent essentiellement en ceci que l'aligneur peut ainsi être régulé en temps réel, ce qui permet d'éviter des accumulations de récipients ou des lacunes excessives au niveau de la file unique de sortie des récipients, qui est, par suite, alimentée de façon régulière et constante.

De ce fait, l'aligneur conforme à l'invention, régulé en temps réel, permet d'aligner de l'ordre de soixante mille récipients par heure, ou plus suivant la surface d'encombrement d'un récipient.

Il en résulte, par rapport aux régulations discontinues connues dans l'état de la technique, une fiabilité accrue de la fonction de regroupement, une diminution de l'encombrement, et une productivité accrue de la machine desservie.

L'invention est exposée ci-après plus en détail à l'aide de dessins représentant seulement des modes particuliers d'exécution.

- 4 - 0190090

La figure 1 représente en vue de dessus un aligneur de récipients conforme à l'invention.

La figure 2 représente l'aligneur en vue en élévation et en coupe selon le plan de coupe I-I de la figure 1.

La figure 3 représente l'aligneur en vue en élévation et en coupe selon le plan de coupe II-II de la figure 1.

La figure 4 représente en vue de dessus une chaîne de convoyage de récipients comportant un aligneur régulé en temps réel conforme à l'invention.

La figure 5 représente en vue de dessus un transporteur de récipients équipé d'un mode de réalisation particulier de l'aligneur régulé en temps réel selon l'invention.

La figure 6 représente en vue en élévation et en coupe selon le plan de coupe V-V, un transporteur de récipients équipé tel que précité.

La figure 7 représente en vue agrandie et schématique, une image transmise par la caméra au calculateur du dispositif de régulation de l'aligneur conforme à l'invention.

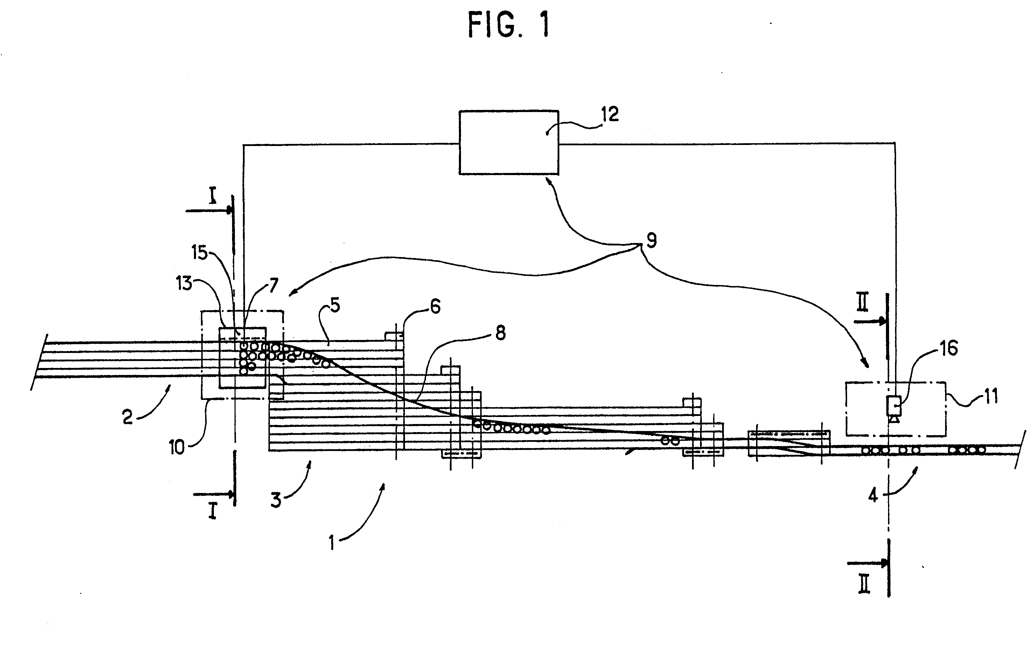

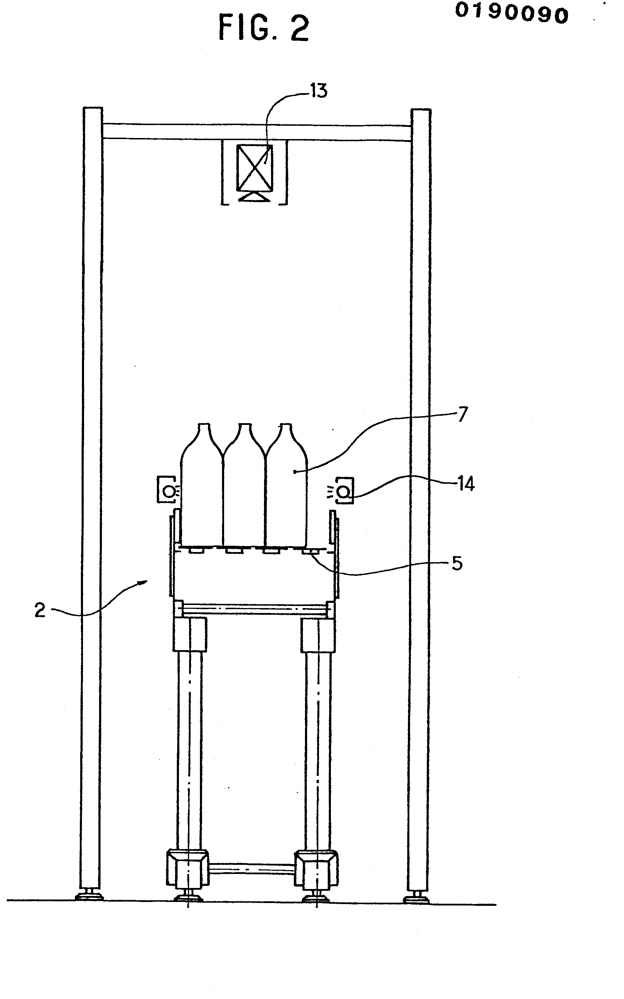

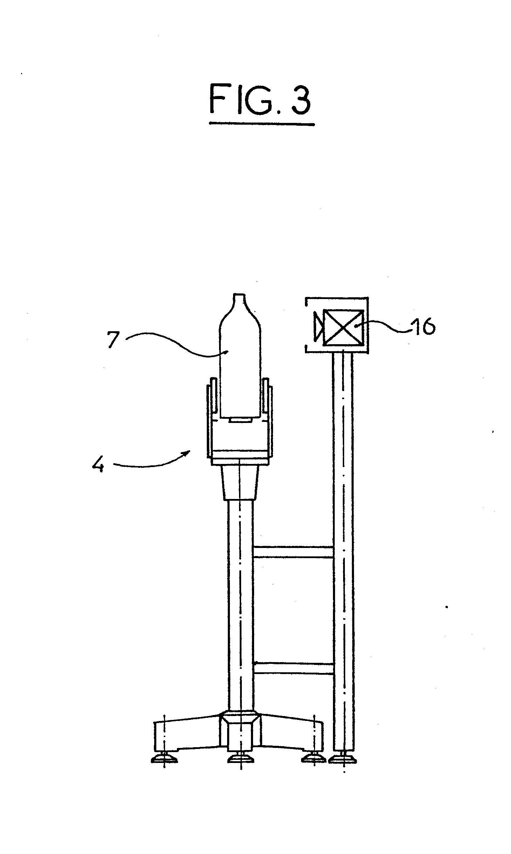

On se réfère aux figures 1, 2 et 3.

L'aligneur 1 de récipients est principalement constitué d'un transporteur d'alimentation 2 à plusieurs voies alimentant une surface de séparation 3 débouchant sur un transporteur à voie unique 4. La surface de séparation 3 est constituée de plusieurs transporteurs à chaînes à palettes 5 disposées parallèlement et entraînés par des moteurs, par exemple des moteurs électriques 6.

Afin de permettre une séparation aisée et dans de bonnes conditions sonores des récipients 7 arrivant sur plusieurs files, les transporteurs à chaînes à palettes 5 fonctionnent à des vitesses différentes. Les récipients 7 transitent d'un transporteur vers son voisin sous l'effet combiné de l'avancement des transporteurs 5 et du guidage résultant de la rampe de guidage curviligne 8.

L'aligneur 1 conforme à la présente invention comporte en outre, selon un premier mode d'exécution, un dispositif de régulation en temps réel 9 de la vitesse de chaque transporteur à chaînes à palettes 5. Ce dispositif de régulation 9 est constitué d'un dispositif de comptage en vrac 10 des récipients 7 arrivant sur plusieurs files, disposé à l'entrée de l'aligneur 1.

Le dispositif de régulation en temps réel 9 comporte en outre un dispositif de comptage en ligne 11 situé au niveau de la file unique de sortie circulant sur le transporteur à voie unique 4.

Le dispositif de régulation en temps réel 9 de l'aligneur 1 comporte également une unité de traitement ou calculateur 12. Celui-ci est connecté, d'une part, au dispositif de comptage en vrac 10 et au dispositif de comptage en ligne 11 qui lui fournissent le résultat de leur comptage à des instants déterminés et, d'autre part, aux différents moteurs animant les transporteurs, desquels il commande la vitesse.

Lors du fonctionnement de l'aligneur 1 conforme à l'invention, les récipients 7 arrivant en vrac sur plusieurs files au niveau du transporteur à plusieurs voies 2 sont comptés par le dispositif de comptage en vrac 10. Simultanément, le dispositif de comptage en ligne 11 situé en sortie de l'aligneur comptabilise les récipients 7 qui quittent l'aligneur 1.

Les résultats de chaque comptage sont alors transmis sous forme numérique aux moyens calculateurs 12 qui en effectuent la différence, et envoient une commande de vitesse aux moteurs 6 en fonction du résultat de cette différence.

Pour un fonctionnement normal de l'aligneur 1, cette différence doit rester pratiquement constante, ce qui traduit le fait que le nombre de récipients 7 présents à chaque instant sur l'aligneur reste constant.

En effet, la variation de la vitesse des moteurs situés au voisinage de la sortie de l'aligneur va obligatoirement se répercuter sur l'alimentation de l'aligneur, puisque l'évacuation d'un certain nombre de récipients fait intervenir la régulation amont, agissant sur la vitesse des moteurs 6.

Ce mode de fonctionnement de l'aligneur est particulièrement avantageux car il permet une régulation des vitesses des transporteurs 5 en temps réel.

En effet, les comptages en entrée et en sortie de l'aligneur 1 sont effectués à des instants très rapprochés, de l'ordre de soixante micros seconde. Par ailleurs, la rapidité de la transmission des résultats du comptage au calculateur 12, de leur traitement et de la réponse analogique fournie aux moteurs 6 pour la commande de leur vitesse, permettent de réajuster cette vitesse très rapidement après chaque comptage.

De ce fait, la sortie d'un lot de récipients 7 de l'aligneur 1 entraîne immédiatement l'entrée d'un lot équivalent sur celui-ci.

Dans un mode de réalisation préférentiel de l'invention, le dispositif de comptage en vrac 10 de l'aligneur 1 est constitué d'un moyen utilisant la reconnaissance visuelle des formes préalablement mémorisées des récipients 7 arrivant en vrac.

De ce fait, ce dispositif de comptage en vrac 10 est constitué d'une caméra vidéo 13 placée au-dessus du transporteur à plusieurs voies 2. Ainsi, la caméra vidéo 13 scrute par le haut les récipients 7 placés dans son champ de vision et éclairés par des lampes adéquates 14. L'image qu'elle fournit périodiquement, comme décrit précédemment, est décomposée en un certain nombre de niveaux de gris et numérisée par un interface 15 situé soit dans la caméra vidéo elle-même (figure 1), soit à proximité du calculateur 12.

Celui-ci se charge alors du comptage, à l'aide d'un logiciel adapté, des récipients vus par la caméra vidéo 13.

D'autre part, le dispositif de comptage en ligne 11 est composé d'un simple capteur de comptage en ligne 16. Celui-ci est placé, au niveau de la sortie de l'aligneur 1 latéralement par rapport au transporteur à voie unique 4, et scrute de profil les récipients 7 en transit dans son champ de vision. Son comptage est fourni au calculateur 12 en même temps que celui provenant du comptage en vrac.

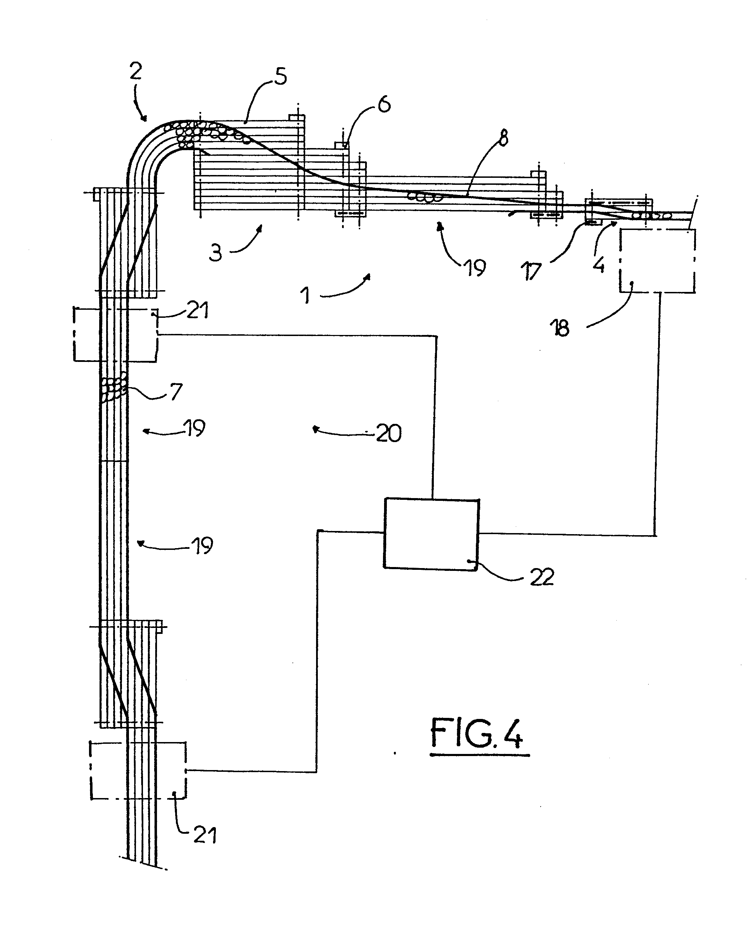

Dans le cas de l'aligneur 1 envisagé, la régulation amont par comptage en vrac qui agit sur le groupe des moteurs 6 de l'aligneur 1 est complétée par une régulation aval qui agit sur l'autre groupe des moteurs aval 17. Cette régulation aval étant basée sur la détermination d'espaces entre récipients par un dispositif de détection de positionnement, est également réalisée par reconnaissance de formes à l'aide d'une caméra vidéo 18 (figure 4). Dans ce cas, la caméra vidéo 18 enregistre la longueur des espaces vides et des espaces occupés par les récipients au niveau de la sortie 4 de l'aligneur.

Cette reconnaissance de formes particulière se fait dans ce cas sur une dimension. A cet effet, la caméra vidéo 18 est placée de profil par rapport aux récipients 7 (figure 4).

On se réfère à la figure 4 où il apparait que, bien entendu, le dispositif de régulation à comptage en vrac décrit précédemment ne se limite pas à la régulation d'un aligneur 1, mais peut être mis en oeuvre pour la régulation des vitesses des transporteurs 19 sur une chaîne complète 20 de convoyage de récipients.

A cet effet, des caméras vidéo 21 sont placées à divers endroits de la chaîne de convoyage, suivant les besoins.

Dans ce mode d'utilisation particulier, les caméras vidéo 21 transmettent leurs images numérisées à un calculateur central 22.

Cependant, malgré la présence de dispositifs de comptage et de régulation en temps réel tel que décrit dans ce premier mode d'exécution, certains problèmes peuvent subsister au niveau du dispositif de comptage en ligne disposé à la sortie de l'aligneur, et ceci notamment lorsque la cadence de fonctionnement s'accélère, auquel cas toute erreur au niveau du comptage en ligne risque de compromettre les résultats du comptage différentiel effectué entre le dispositif de comptage en vrac et le dispositif de comptage en ligne, et par suite, d'empêcher une régulation satisfaisante à haut débit.

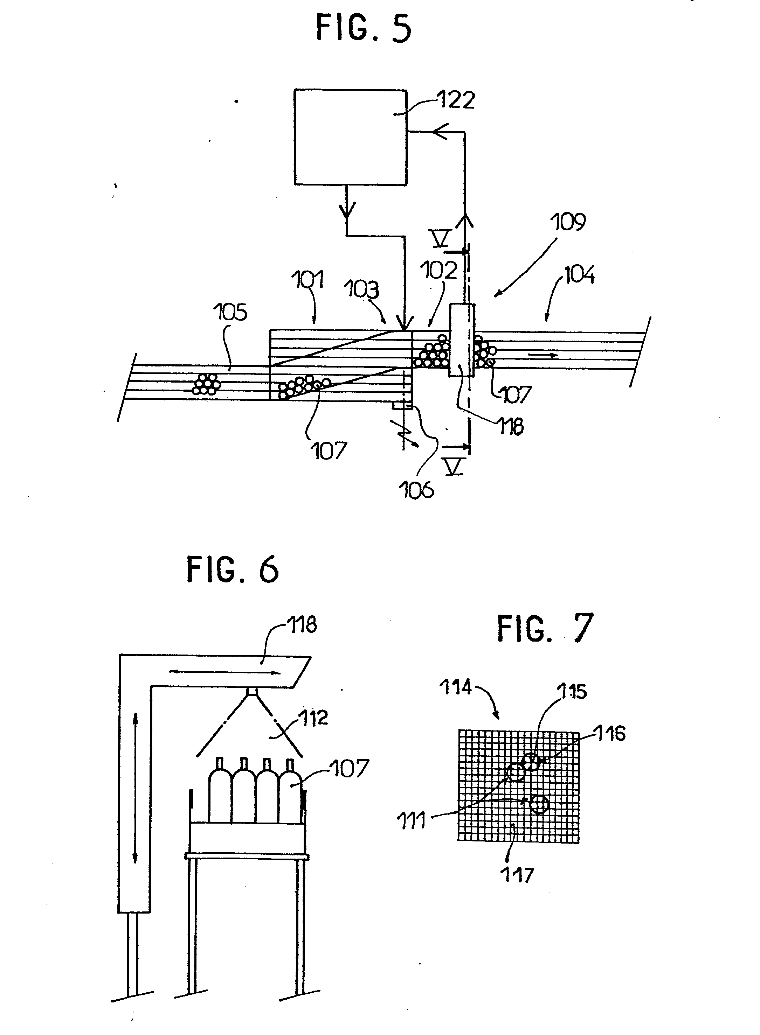

Dans ce cas, on se réfère aux figures 5, 6 et 7 représentant un mode d'exécution plus simple du dispositif de régulation de l'aligneur, et permettant une mise en oeuvre plus rapide et plus aisée tout en conservant les avantages liés à l'utilisation des moyens de reconnaissance des formes.

Selon ce mode d'exécution, le dispositif de régulation de l'aligneur conforme à l'invention est destiné à équiper un transporteur 101 de récipients, constitué de plusieurs transporteurs élémentaires à chaînes à palettes 105 disposés côte à côte, ou la partie amont d'un aligneur 104 sans pression d'objets ou de récipients, destiné à mettre les récipients 107 sur une file unique, la partie aval de cet aligneur 104 et la machine qu'il alimente n'étant pas représentées.

Selon ce mode de réalisation particulier, le dispositif de régulation 109 se compose uniquement d'une caméra 118 pour la reconnaissance des formes des récipients 107 et d'un calculateur 122 relié, d'une part, à ladite caméra 118 par l'intermédiaire d'un appareillage d'interconnexion adéquat connu en soi , et, d'autre part, aux moteurs 106 des transporteurs 105.

Par conséquent, les informations servant à piloter la régulation ne sont plus prélevées qu'en un seul endroit, par une caméra 118 située notamment à proximité de l'entrée 102 de l'aligneur 104 et/ou du transporteur 101 et à proximité de la sortie de l'aligneur et/ou du transporteur précédent.

Il en découle une simplification du dispositif de régulation par rapport à celui décrit précédemment dans lequel deux points de prélèvement d'informations donnaient lieu à un comptage différentiel du nombre de récipients présents sur l'aligneur.

En effet, le dispositif de régulation 109 d'aligneur et/ou de transporteur conforme à l'invention détermine simplement un taux d'occupation 110 de l'aligneur 104 et/ou du transporteur 101 par des récipients 107.

Il s'agit, en fait, de connaître en temps réel et à chaque instant, la surface 111 correspondant au champ de vision 112 de la caméra 118 qui est occupé par des récipients 107 et ceci en relation avec la surface maximale théorique 113 non représentée du champ de vision 112 qui pourrait être occupé par des récipients 107 serrés les uns contre les autres, en fonction de la forme de ceux-ci.

A cet effet, l'image 114 fournie par la caméra 118 et composée d'un certain nombre de pixels 115 est numérisée par le calculateur 122. Pour cela, celui-ci intègre les surfaces élémentaires 116 de l'image 114 qui correspondent à des surfaces occupées par des récipients 107 de façon à obtenir la surface totale 111 occupée par des récipients 107 et, afin d'en faire la comparaison en temps réel avec la surface maximale théorique 113 pouvant être occupée, qui est préalablement mémorisée dans le calculateur 122.

Dans un mode de réalisation particulier de l'invention, la prise en compte des pixels 115 correspondant à des surfaces élémentaires 116 occupées, peut être facilitée en conférant auxdits pixels 115 une couleur particulière, par exemple blanche, contrastée si nécessaire au moyen d'un éclairage adéquat sur un fond noir, correspondant à des zones 117 inoccupées.

Ensuite, le dispositif de régulation 109 conforme à l'invention régule la vitesse des transporteurs 105 situés en amont de l'aligneur 104 et/ ou du transporteur 101 en fonction du taux d'occupation 110 déterminé tel que décrit précédemment.

A cet effet, lorsque le taux d'occupation 110 instantané est inférieur à une limite 119 fixée, le dispositif de régulation 109 accélère les transporteurs 105 situés en amont de l'aligneur 104 et/ou du transporteur 101 afin que les récipients 107 qui sont situés sur ces transporteurs 105 puissent arriver plus rapidement sur l'aligneur 104 et/ou le transporteur 101 pour rétablir un taux d'occupation suffisant.

Bien entendu, la limite 119 fixée dépend d'un certain nombre de paramètres aisément accessibles à l'Homme de Métier, tels que la forme et la surface des récipients 107, la cadence de la machine à alimenter, etc.....

Par contre, lorsque le taux d'occupation 110 instantané est supérieur ou égal à une limite 120 fixée, le dispositif de régulation 109 de l'aligneur 104 décélère les transporteurs 105 situés en amont de l'aligneur 104 et/ou du transporteur 101. Pour cela, le calculateur 122 commande de façon adéquate les moteurs 106.

Enfin, s'il est souhaitable que les limites 119 et 120 soient différentes pour améliorer la régulation, le dispositif de régulation 109 peut, conformément à l'invention, maintenir constante la vitesse des transporteurs 105 lorsque le taux d'occupation 110 instantané est situé entre les limites 119 et 120 fixées.

Dans ce mode d'exécution particulier de l'aligneur et de son dispositif de régulation, l'on obtient une plus grande rapidité de régulation du fait qu'il n'y a plus de comptage différentiel. Par ailleurs, la détermination du taux d'occupation 110 rend inutile la connaissance du nombre de bouteilles, et de plus, ce taux d'occupation 110 est une donnée plus rapidement accessible puisqu'elle est directement fournie par l'image 114 en fonction de la couleur des pixels 115 de celle-ci.

De plus, il est à noter dans ce cas que la régulation s'effectue uniquement par une action sur la vitesse des transporteurs 105 situés en amont de l'aligneur 104 et/ou du transporteur 101 indépendamment de ce qui se passe en aval de ceux-ci.

Revendications

1. Aligneur (1, 104) sans pression d'objets, notamment de récipients, comprenant essentiellement un transporteur d'alimentation à plusieurs voies (2), une surface de séparation (3) intermédiaire formée de plusieurs transporteurs juxtaposés (5, 105), entraînés par des moyens moteurs (6, 106) à des vitesses échelonnées, un transporteur de sortie (4) à voie unique et un dispositif de régulation des vitesses des divers transporteurs, aligneur caractérisé par le fait qu'il comporte un dispositif de régulation en temps réel (9, 109) des vitesses de fonctionnement desdits transporteurs juxtaposés (5, 105), ledit dispositif de régulation en temps réel (9) étant constitué, d'une part, d'un dispositif de comptage en vrac (10) des récipients (7), disposé au niveau de l'entrée de la surface de séparation (3), et d'autre part, d'un dispositif de comptage en ligne (11) situé au niveau du transporteur de sortie à voie unique (4), lesdits dispositifs de comptage en vrac (10) et de comptage en ligne (11) coopérant avec un calculateur (12) délivrant aux moyens moteurs (6) une commande de vitesse élaborée en temps réel par le calculateur (12), en fonction des résultats qui sont fournis simultanément à ce dernier par le dispositif de comptage en vrac (10) d'une part, et par le dispositif de comptage en ligne (11) d'autre part.

2. Aligneur (1) selon la revendication 1, caractérisé par le fait que la commande en temps réel de la vitesse des moyens moteurs (6) élaborée par ledit calculateur (12), est une fonction du résultat de la différence effectuée par ledit calculateur (12) entre les résultats fournis, d'une part, par le dispositif de comptage en vrac (10) et, d'autre part, par le dispositif de comptage en ligne (11).

3. Aligneur selon la revendication 1, caractérisé par le fait que ledit dispositif de régulation en temps réel (9) comporte un moyen de détection de positionnement des récipients (7) au niveau de la sortie (4) de l'aligneur, ledit moyen de détection de positionnement se composant d'une caméra vidéo (18) placée en sortie de l'aligneur (1), et enregistrant la longueur des espaces vides et des espaces occupés par les récipients (7) au niveau de la sortie (4) de l'aligneur.

4. Aligneur selon la revendication 1, caractérisé par le fait que ledit dispositif de comptage en vrac (10) des récipients (7), comporte des moyens de reconnaissance des formes des récipients (7), transmettant leurs informations à des calculateurs (12, 22) sollicitant les moteurs (6, 17) de l'aligneur (1) et/ou du transporteur, lesdits moyens de reconnaissance des formes des récipients (7) se composant au moins d'une caméra vidéo (13, 18) placée en entrée et/ou en sortie de l'aligneur et/ou du transporteur.

5. Aligneur selon la revendication 4, caractérisé par le fait que ladite caméra vidéo (13) du dispositif de régulation (9) est disposée au-dessus des récipients (7) pour les scruter par le haut.

6. Aligneur selon la revendication 4, caractérisé par le fait que ladite caméra vidéo (18) du dispositif de régulation (9) est disposée latéralement par rapport à l'aligneur et/ou au transporteur pour scruter les récipients (7) de profil.

7. Aligneur (104) selon la revendication 1, caractérisé par le fait que le dispositif de régulation (109) se compose uniquement d'une caméra (118) pour la reconnaissance des formes des récipients (107) et d'un calculateur (122) relié, d'une part, à la caméra (118), par l'intermédiaire d'un appareillage d'interconnexion adéquat connu en soi, et, d'autre part, aux moteurs (106) des transporteurs (105), ladite caméra (118) étant placée à proximité de l'entrée (102) de l'aligneur (104) et/ou du transporteur (101), et à proximité de l'aligneur et/ou du transporteur précédent.

8. Aligneur (104) selon les revendications 1 et 7, caractérisé par le fait que le dispositif de régulation (109) détermine un taux d'occupation (110) de l'aligneur (104) et/ou du transporteur (101) par des récipients (107) puis qu'en fonction dudit taux d'occupation (110), il régule la vitesse des transporteurs (105) situés en amont de l'aligneur (104) et/ou du transporteur (101).

9. Aligneur (104) selon la revendication 8, caractérisé par le fait que pour la détermination du taux d'occupation (110) de l'aligneur (104)

et/ou du transporteur (101), le dispositif de régulation (109) détermine à l'aide de la caméra (118) reliée au calculateur (122), la surface (111) occupée par les récipients (107) dans le champ de vision (112) de la caméra (118), puis il compare en temps réel ladite surface occupée (111) à la surface maximale théorique (113) du champ de vision (112) de la caméra (118), pouvant être occupée par les récipients (107).

10. Aligneur (104) selon la revendication 9, caractérisé par le fait que, pour la détermination de ladite surface occupée (111), le dispositif de régulation (109) procède, à l'aide du calculateur (122), à une intégration des surfaces élémentaires (116) occupées par les récipients (107) et formées sur l'image (114) délivrée par la caméra (118), par des pixels (115) colorés de manière déterminée.

11. Aligneur (104) selon la revendication 8, caractérisé par le fait que, lorsque le taux d'occupation (110) instantané est inférieur ou supérieur respectivement à une limite fixée (119) ou (120), le dispositif de régulation (109) accélère ou respectivement décélère les transporteurs (105) situés en amont de l'aligneur (104) et/ou du transporteur (101).

12. Aligneur (104) selon la revendication 8, caractérisé par le fait que, lorsque le taux d'occupation (110) instantané est situé entre les limites (119) et (120), le dispositif de régulation (109) maintient constante la vitesse des transporteurs (105) situés en amont de l'aligneur (104) et/ou du transporteur (101).

# FIG. 1

0190090

# FIG. 3

0190090

FIG.4

FIG. 5

FIG. 6

FIG. 7

Office européen
des brevets

**RAPPORT DE RECHERCHE EUROPEENNE**

Numero de la demande

EP 86 44 0003

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl.4) |
|---|---|---|---|
| D,X | DE-A-3 129 389 (H. BÖCKER)<br>* Revendications; pages 7-10; figures * | 1,2 | B 65 G 47/68 |
| D,Y | | 4,7-9 | |
| D,A | | 3 | |
| | --- | | |
| Y | ECOBOUTEILLES, Consigne Géante de Bouteilles, mars 1984, Paris, FR; "Le tri automatisé"<br>* En entier * | 4,7-9 | |
| | ----- | | |

DOMAINES TECHNIQUES
RECHERCHES (Int. Cl.4)

B 65 G

Le present rapport de recherche a été etabli pour toutes les revendications

| Lieu de la recherche<br>LA HAYE | Date d achèvement de la recherche<br>11-04-1986 | Examinateur<br>WERNER D.M. |
|---|---|---|